# EUROPÄISCHE PATENTSCHRIFT

(11) **EP 1 286 044 B1**
(45) Veröffentlichungstag und Bekanntmachung des Hinweises auf die Patenterteilung: **20.12.2006**
(21) Anmeldenummer: 02016002.4
(22) Anmeldetag: 18.07.2002
(51) Int. Cl.: F02M 61/16, F02M 59/46, F02M 57/02, F02D 41/30, F02D 41/40

(54) **Verfahren und System zum Beeinflussen der Einspritzmenge einer Kraftstoffzumesseinheit**
Method and system to influence the injection quantity of a fuel metering device
Procédé et système pour influencer la quantité injectée d'un dispositif de dosage de carburant

(30) Priorität: 16.08.2001 DE 10140091
(43) Veröffentlichungstag der Anmeldung: 26.02.2003
(73) Patentinhaber: ROBERT BOSCH GMBH, 70442 Stuttgart (DE)
(72) Erfinder: Franck, Matthias, 72760 Reutlingen (DE); Oettinger, Andreas, 72574 Bad Urach (DE)

(56) Entgegenhaltungen:
- EP-A- 0 854 281
- EP-A- 0 940 571
- US-A- 5 634 448

## Beschreibung

Die Erfindung betrifft ein Verfahren zum Beeinflussen der Einspritzmenge einer Kraftstoffzumesseinheit, in Form einer Pumpe-Düse-Einheit, mit den Schritten: Ermitteln der Einspritzmenge für wenigstens einen Prüfpunkt und Korrigieren der Einspritzmenge in Abhängigkeit der an dem wenigstens einen Prüfpunkt ermittelten Einspritzmenge. Die Erfindung betrifft ferner ein System zum Beeinflussen der Einspritzmenge einer Pumpe-Düse-Einheit, mit Mitteln zum Ermitteln der Einspritzmenge für wenigstens einen Prüfpunkt und Mitteln zum Korrigieren der Einspritzmenge in Abhängigkeit der an dem wenigstens einen Prüfpunkt ermittelten Einspritzmenge.

### Stand der Technik

Bei einer Pumpe-Düse-Einheit (UI; "Unit Injector") bilden die Einspritzpumpe und die Einspritzdüse eine Einheit. Im Allgemeinen wird pro Motorzylinder eine Einheit in den Zylinderkopf eingebaut und entweder direkt über einen Stößel oder indirekt über Kipphebel von der Motornockenwelle angetrieben. Im Vergleich zu Reihen- und Verteilereinspritzpumpen hat die Pumpe-Düse-Einheit den Vorteil, dass keine Hochdruckleitungen erforderlich sind. Somit lässt sich ein wesentlich höherer Einspritzdruck zur Verfügung stellen. Aufgrund dieses hohen Einspritzdruckes und durch die elektronische Kennfeldregelung von Einspritzbeginn und Einspritzdauer (beziehungsweise Einspritzmenge) ist eine deutliche Reduzierung von Schadstoffemissionen möglich. Elektronische Regelkonzepte ermöglichen verschiedene Zusatzfunktionen.

Problematisch bei den Pumpe-Düse-Einheiten sind die Fertigungstoleranzen. Insbesondere ist es erwünscht, die Einspritzmengentoleranzen pro Hub der Pumpe-Düse-Einheit zu reduzieren. Dieser Anforderung wird zum einen dadurch begegnet, dass die fertigen Pumpe-Düse-Einheiten geprüft werden, woraufhin solche Exemplare, deren Einspritzmengen außerhalb der Toleranzbereiche liegen, aussortiert werden. Dies verringert die Gutausbringung bei der Fertigung. Andere Maßnahmen gehen dahin, die Pumpe-Düse-Einheiten nach Fertigstellung konstruktiv zu verändern, so dass die erreichten Einspritzmengen innerhalb der angestrebten Mengentoleranzen liegen. Es sind somit zusätzliche Fertigungsschritte erforderlich.

Die EP 0 940 571 offenbart ein Verfahren und eine Vorrichtung zur Streuerungskorrektur bei Kraftstoffinjektoren durch Anpassung der Ansteuerdauer.

### Vorteile der Erfindung

Die Erfindung baut auf dem gattungsgemäßen Verfahren dadurch auf, dass die Einspritzmenge durch Korrigieren eines Haltestroms eines Magnetventils korrigiert wird und dass der korrigierte Haltestrom zur Korrektur der Einspritzmenge im gesamten Betriebsbereich der Pumpe-Düse-Einheit verwendet wird. Durch Einstellung des Haltestroms des Magnetventils ist es möglich, eine sehr gute Korrelation zwischen den Mengenniveaus bei unterschiedlichen Prüfpunkten, welche unterschiedlichen Motordrehzahlen entsprechen, zur Verfügung zu stellen. Es hat sich erwiesen, dass der Haltestrom des Magnetventils an unterschiedlichen Prüfpunkten vergleichbare Einflüsse auf die Einspritzmenge der Pumpe-Düse-Einheiten nimmt, so dass letztlich über den gesamten Betriebsbereich der Pumpe-Düse-Einheit mit denselben Korrekturwerten für den Haltestrom gearbeitet werden kann.

Vorzugsweise wird der Haltestrom auf der Grundlage von Einspritzmengen korrigiert, die an mehreren Prüfpunkten ermittelt werden. Auf diese Weise lässt sich der optimale Korrekturwert für den Haltestrom berechnen, das heißt der Korrekturwert für den Haltestrom, welcher über den gesamten Betriebsbereich der Pumpe-Düse-Einheit Einspritzmengen innerhalb der angestrebten Toleranzbereiche ermöglicht.

Vorzugsweise wird ein Korrekturwert für den Haltestrom in oder an der Pumpe-Düse-Einheit gespeichert. Eine derartige Speicherung kann über einen Chip, einen Barcode, über Klarschrift oder über vergleichbare Konzepte erfolgen. Somit ist jede Pumpe-Düse-Einheit unabhängig von anderen Komponenten eindeutig mit dem optimalen Korrekturwert gekennzeichnet. Die Pumpe-Düse-Einheit kann daher im Rahmen einer beliebigen Motorsteuerung optimiert betrieben werden.

Es ist besonders vorteilhaft, wenn der Korrekturwert für den Haltestrom von einem Motorsteuergerät einmalig eingelesen wird. Der Motorsteuerung wird also der in dem Prüfverfahren ermittelte Korrekturwert übergeben. Im späteren Betrieb des Systems kann somit stets innerhalb des angestrebten Toleranzbereiches gearbeitet werden.

In diesem Zusammenhang erweist es sich als vorteilhaft, dass der Korrekturwert für den Haltestrom durch eine in dem Motorsteuergerät vorgesehene Driftkompensation über die Lebensdauer der Pumpe-Düse-Einheit anpassbar ist. Treten Drifteffekte innerhalb des Systems auf, so können diese auch im Hinblick auf den Korrekturwert für den Haltestrom berücksichtigt werden.

Es kann ebenfalls vorteilhaft sein, dass die Pumpe-Düse-Einheit in Abhängigkeit des Korrekturwertes für den Haltestrom einer Klasse zugeordnet wird. Die Speicherung der Einteilung in derartige Stromklassen kann ebenfalls über ein Chip, einen Barcode, durch Klarschrift oder ähnliche Konzepte erfolgen. Auf der Grundlage der Stromklasse, in welche die Pumpe-Düse-Einheit eingeteilt ist, kann das Motorsteuergerät eine optimale Steuerung der Pumpe-Düse-Einheit veranlassen.

Es kann auch vorteilhaft sein, dass der korrigierte Haltestrom durch einmaliges Einstellen eines an der Pumpe-Düse-Einheit angeordneten Potentiometers eingestellt wird. Durch diese Variante der vorliegenden Erfindung ist es entbehrlich, die Pumpe-Düse-Einheiten mit Korrekturwerten beziehungsweise Klassenbezeichnungen zu kennzeichnen. Ferner ist es nicht erforderlich, dass das Motorsteuergerät Werte einliest, mit denen die Pumpe-Düse-Einheiten gekennzeichnet sind. Die Einspritzmengen der Pumpe-Düse-Einheiten liegen aufgrund der Einstellung des Haltestroms durch ein Potentiometer von vornherein innerhalb des angestrebten Mengentoleranzbereiches.

Nützlicherweise wird das Potentiometer nach dem einmaligen Einstellen vergossen. Auf diese Weise wird ein unbeabsichtigtes Verstellen des Potentiometers insbesondere während des Langzeitbetriebs vermieden.

Die Erfindung baut in einer weiteren Ausführungsform dadurch auf dem gattungsgemäßen Verfahren auf, dass die Einspritzmenge durch Korrigieren einer Haltekraft eines Magnetventils korrigiert wird, dass die korrigierte Haltekraft zur Korrektur der Einspritzmenge im gesamten Betriebsbereich der Pumpe-Düse-Einheit verwendet wird und dass die Haltekraft durch Abgreifen einer bestimmten Windungszahl an der Magnetventilspule eingestellt wird. Es ist somit ebenfalls möglich, letztlich die magnetische Feldstärke als Stellgröße zu verwenden und diese durch die Windungszahl der Magnetspule zu variieren. Das Abgreifen der Magnetventilspule kann beispielsweise über DIP-Schalter, Mehrpinstecker oder vergleichbare Bauteile erfolgen. Bei dieser Variante der Erfindung ist der logistische Mehraufwand im Vergleich zur Kennzeichnung der Pumpe-Düse-Einheiten eher gering.

Die Erfindung baut auf dem gattungsgemäßen System dadurch auf, dass die Mittel zum Korrigieren der Einspritzmenge einen Haltestrom eines Magnetventils korrigieren und dass der korrigierte Haltestrom zur Korrektur der Einspritzmenge im gesamten Betriebsbereich der Pumpe-Düse-Einheit verwendbar ist. Wie bereits im Zusammenhang mit dem erfindungsgemäßen Verfahren erwähnt wurde, ist es durch Einstellung des Haltestroms des Magnetventils möglich, eine sehr gute Korrelation zwischen den Mengenniveaus bei unterschiedlichen Prüfpunkten, das heißt Motordrehzahlen, zur Verfügung zu stellen. Der Haltestrom des Magnetventils hat an unterschiedlichen Prüfpunkten vergleichbare Einflüsse auf die Einspritzmenge der Pumpe-Düse-Einheiten, so dass über den gesamten Betriebsbereich der Pumpe-Düse-Einheit mit denselben Korrekturwerten für den Haltestrom gearbeitet werden kann.

Das System ist in vorteilhafter Weise dadurch weitergebildet, dass durch die Mittel zum Ermitteln der Einspritzmenge Werte an mehreren Prüfpunkten ermittelbar sind. Auf diese Weise lässt sich der optimale Korrekturwert für den Haltestrom berechnen, das heißt der Korrekturwert für den Haltestrom, welcher über den gesamten Betriebsbereich der Pumpe-Düse-Einheit Einspritzmengen innerhalb der angestrebten Toleranzbereiche ermöglicht.

Es ist vorteilhaft, dass Mittel zum Speichern eines Korrekturwerts für den Haltestrom in oder an der Pumpe-Düse-Einheit vorgesehen sind. Eine derartige Speicherung kann bei dem erfindungsgemäßen System über einen Chip, einen Barcode, über Klarschrift oder über vergleichbare Konzepte erfolgen. Somit ist jede Pumpe-Düse-Einheit unabhängig von anderen Komponenten eindeutig mit dem optimalen Korrekturwert gekennzeichnet. Die Pumpe-Düse-Einheit kann daher im Rahmen einer beliebigen Motorsteuerung optimiert betrieben werden.

Weiterhin ist von Vorteil, dass die Mittel zum Korrigieren der Einspritzmenge in einem Motorsteuergerät integriert sind. Der Motorsteuerung wird also der in dem Prüfverfahren ermittelte Korrekturwert übergeben. Im späteren Betrieb des Systems kann somit stets innerhalb des angestrebten Toleranzbereiches gearbeitet werden.

Es hat ferner Vorzüge, wenn das System so ausgestaltet ist, dass in dem Motorsteuergerät eine Driftkompensation vorgesehen ist. Treten Drifteffekte innerhalb des Systems auf, so können diese auch im Hinblick auf den Korrekturwert für den Haltestrom berücksichtigt werden.

In einer bevorzugten Ausführungsform sind Mittel zum Klassifizieren der Pumpe-Düse-Einheit in Abhängigkeit des Korrekturwertes für den Haltestrom vorgesehen. Die Speicherung der Einteilung in derartige Stromklassen kann ebenfalls über ein Chip, einen Barcode, durch Klarschrift oder ähnliche Konzepte erfolgen. Auf der Grundlage der Stromklasse, in welche die Pumpe-Düse-Einheit eingeteilt ist, kann das Motorsteuergerät eine optimale Steuerung der Pumpe-Düse-Einheit veranlassen.

Ebenfalls kann es nützlich sein, dass an der Pumpe-Düse-Einheit ein Potentiometer zum Einstellen des korrigierten Haltestroms vorgesehen ist. Durch diese Variante der vorliegenden Erfindung ist es entbehrlich, die Pumpe-Düse-Einheiten mit Korrekturwerten beziehungsweise Klassenbezeichnungen zu kennzeichnen. Ferner ist es nicht erforderlich, dass das Motorsteuergerät Werte einliest, mit denen die Pumpe-Düse-Einheiten gekennzeichnet sind. Die Einspritzmengen der Pumpe-Düse-Einheiten liegen aufgrund der Einstellung des Haltestroms durch ein Potentiometer von vornherein innerhalb des angestrebten Mengentoleranzbereiches. Das Potentiometer kann nach seiner Einstellung zum Vermeiden eines unbeabsichtigten Verstellens vergossen werden.

In einer weiteren Ausführungsform baut das erfindungsgemäße System auf dem gattungsgemäßen System dadurch auf, dass die Mittel zum Korrigieren der Einspritzmenge eine Haltekraft eines Magnetventils korrigieren, dass die korrigierte Haltekraft zur Korrektur der Einspritzmenge im gesamten Betriebsbereich der Pumpe-Düse-Einheit verwendbar ist und dass Mittel zum Abgreifen einer bestimmten Windungszahl an der Magnetventilspule und somit zum Korrigieren der Haltekraft vorgesehen sind. Wie bereits im Zusammenhang mit der weiteren Ausführungsform des Verfahrens erwähnt wurde, ist es somit ebenfalls möglich, die magnetische Feldstärke als Stellgröße zu verwenden und diese durch die Windungszahl der Magnetspule zu variieren. Bei dieser Variante der Erfindung ist der logistische Mehraufwand im Vergleich zur Kennzeichnung der Pumpe-Düse-Einheiten eher gering.

Der Erfindung liegt die überraschende Erkenntnis zugrunde, dass Ausführungsformen zur Verfügung gestellt werden, bei denen keine konstruktiven Änderungen an einer bestehenden Pumpe-Düse-Einheit erforderlich sind, wobei dennoch ein angestrebter Toleranzbereich beim Betrieb der Pumpe-Düse-Einheit eingehalten werden kann. Diese Erkenntnis beruht insbesondere darauf, dass der Haltestrom eine geeignete Größe ist, mit welcher die fertige Pumpe-Düse-Einheit über den gesamten Betriebsbereich vorteilhaft beeinflusst werden kann. Die Erfindung ist in einfacher Weise umsetzbar, wobei ein zusätzlicher Kostenaufwand ausschließlich bei der Erzeugnisprüfung und der Logistik zu verzeichnen ist. Es sind sehr kleine Toleranzen darstellbar. Ein bestimmter logistischer Mehraufwand ist auch beim Kunden erforderlich. Dies kann auf der Grundlage weiterer Ausführungsformen der Erfindung vermieden werden, nämlich dadurch, dass der Haltestrom beziehungsweise die magnetische Feldstärke direkt durch konstruktive Maßnahmen an der Pumpe-Düse-Einheit beeinflusst werden. Die Erfindung bietet die Grundlage für eine Erhöhung der Gutausbringung, eine Reduzierung der Nacharbeit, eine Reduzierung der Exemplar-Exemplar-Steuerung der in einem Motor eingebauten Pumpe-Düse-Einheiten und damit eine Verbesserung von Emissionen, Laufruhe und Fahrverhalten. Ferner werden Leistungsstreuungen verhindert. Es ist ebenfalls zu erwarten, dass sich positive Auswirkungen auf die Lebensdauer des Motors einstellen. Auf der Grundlage der Erfindung sind Einspritzmengentoleranzen von +/- 1,35 mm³ pro Hub erreichbar.

Die Vorgehensweise ist nicht auf einen Einsatz bei Pumpe-Düse-Einheiten beschränkt. Vielmehr kann sie für zahlreiche andere magnetventilgesteuerte Produkte genutzt werden.

### Zeichnungen

Die Erfindung wird nun mit Bezug auf die begleitenden Zeichnungen anhand bevorzugter Ausführungsformen beispielhaft erläutert.

Dabei zeigt:
- Figur 1: ein Teil eines erfindungsgemäßen Systems zur Durchführung erster Verfahrensschritte;
- Figur 2: einen Teil eines erfindungsgemäßen Systems zur Durchführung zweiter Verfahrensschritte; und
- Figur 3: einen Diagramm zur Erläuterung der Erfindung.

### Beschreibung der Ausführungsbeispiele

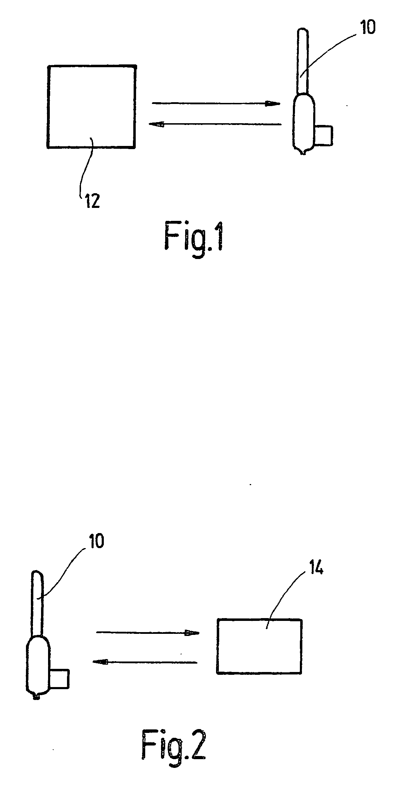

In Figur 1 ist ein Teil eines erfindungsgemäßen Systems zur Erläuterung erster Verfahrensschritte dargestellt. Eine Pumpe-Düse-Einheit 10 kommuniziert mit einer Einrichtung 12. Diese Einrichtung 12 ist durch eine einzige Einheit symbolisiert. In realen Ausführungsformen können die vorliegend in Verbindung mit der Einrichtung 12 beschriebenen Funktionen von verschiedenen Einheiten verwirklicht werden. Die Einrichtung 12 ermittelt die Einspritzmenge der Pumpe-Düse-Einheit 10 für einen oder mehrere Prüfpunkte. Unterschiedliche Prüfpunkte entsprechen dabei unterschiedlichen Motordrehzahlen. Die ermittelten Einspritzmengen werden von der Einrichtung 12 mit Soll-Einspritzmengen verglichen. Auf dieser Grundlage werden nun Korrekturwerte für den Haltestrom der Pumpe-Düse-Einheit 10 in der Einrichtung 12 ermittelt. Diese Korrekturwerte für den Haltestrom werden in oder an der Pumpe-Düse-Einheit 10 gespeichert, beispielsweise auf einem Chip, in Form eines Barcodes oder auch als Klartext. Es sind zahlreiche weitere Möglichkeiten denkbar, die Korrekturwerte an oder in der Pumpe-Düse-Einheit 10 zu speichern.

Es ist ebenfalls möglich, die Korrekturwerte nicht explizit in Form einzelner Werte zu messen. Vielmehr ist es weiterhin denkbar, die verschiedenen Pumpe-Düse-Einheiten 10 in unterschiedliche Klassen einzuteilen. Diese Klasseninformation wird dann auf den verschiedenen Pumpe-Düse-Einheiten 10 gespeichert.

Figur 2 zeigt schematisch einen weiteren Teil eines erfindungsgemäßen Systems. Während der hier dargestellten Verfahrensschritte wird die an oder in der Pumpe-Düse-Einheit 10 gespeicherte Information von einem Motorsteuergerät 14 einmalig ausgelesen. Diese Information ist für das Motorsteuergerät 14 ausreichend, um die Pumpe-Düse-Einheit 10 über ihren gesamten Betriebsbereich so zu betreiben, dass die maximalen Mengentoleranzen nicht überschritten werden.

Das Speichern der Daten an oder in der Pumpe-Düse-Einheit 10 beziehungsweise das Auslesen dieser Daten ist entbehrlich, wenn die Pumpe-Düse-Einheit 10 sogleich während des Prüfprozesses "geeicht" wird, nämlich durch Einstellen des Haltestroms des Magnetventils, beispielsweise durch ein Potentiometer an oder in der Pumpe-Düse-Einheit 10. Dieses Potentiometer kann nach dem Einstellen vergossen werden. Eine weitere Möglichkeit einer solchen "Eichung" der Pumpe-Düse-Einheit besteht darin, eine bestimmte Windungszahl der Magnetventilspule abzugreifen. Hierdurch erfolgt eine direkte Beeinflussung der Magnetkraft, so dass letztlich diese als Stellgröße verwendet wird.

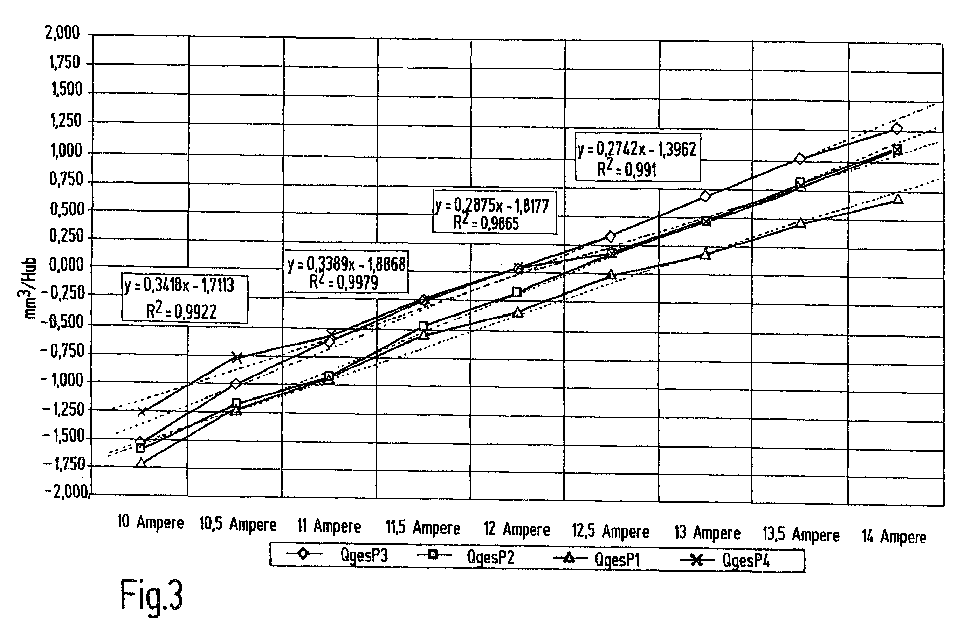

In Figur 3 ist ein Diagramm zur Erläuterung der Erfindung dargestellt. Die unterschiedlichen Symbole kennzeichnen Messpunkte, welche bei unterschiedlichen Prüfpunkten, das heißt bei unterschiedlichen Motordrehzahlen aufgenommen wurden. Die unterbrochenen Linien stellen jeweils lineare Näherungen an die Messpunkte dar. In dem Diagramm sind die Abweichungen der Einspritzmenge Q_{ges} in mm³ pro Hub von einem Sollwert gegen den Haltestrom des Magnetventils in Ampere aufgetragen. Zunächst ist erkennbar, dass die Abweichung der Einspritzmenge vom Sollwert bei allen Prüfpunkten nahezu linear vom Haltestrom abhängt. Damit lässt sich in einfacher Weise ein Haltestrom bestimmen, bei welchem eine bestimmte Abweichung vom Sollwert vorliegt. Ferner ist erkennbar, dass bei allen Betriebspunkten die Abhängigkeit der Abweichung von dem Haltestrom vergleichbar ist; dies zeigt sich an den nahezu parallelen Verläufen der Messkurven. Daher kann durch die Auswahl eines geeigneten Haltestroms für sämtliche Betriebspunkte eine Korrektur erzielt werden, welche die Abweichungen der Einspritzmenge vom Sollwert der Einspritzmenge innerhalb eines engen Toleranzbereiches erhält. Der Haltestrom des Magnetventils kann somit erfindungsgemäß als Stellgröße dienen, da es sich um eine Größe handelt, die bei der fertigen Pumpe-Düse-Einheit beeinflusst werden kann beziehungsweise von der Motorsteuerung berücksichtigt werden kann.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung zu verlassen, wie er durch die beiliegenden Patentansprüche definiert ist.

## Patentansprüche

1. Verfahren zum Beeinflussen der Einspritzmenge einer Kraftstoffzumesseinheit in Form einer Pumpe-Düse- Einheit (10), mit den Schritten:
- Ermitteln der Einspritzmenge für wenigstens einen Prüfpunkt und
- Korrigieren der Einspritzmenge in Abhängigkeit der an dem wenigstens einen Prüfpunkt ermittelten Einspritzmenge,
**dadurch gekennzeichnet,**
- **dass** die Einspritzmenge durch Korrigieren eines Haltestroms eines Magnetventils korrigiert wird und
- **dass** der korrigierte Haltestrom zur Korrektur der Einspritzmenge im gesamten Betriebsbereich der Pumpe- Düse-Einheit (10) verwendet wird.

2. Verfahren nach Anspruch 1, **dadurch gekennzeichnet, dass** der Haltestrom auf der Grundlage von Einspritzmengen korrigiert wird, die an mehreren Prüfpunkten ermittelt werden.

3. Verfahren nach Anspruch 1 oder 2, **dadurch gekennzeichnet, dass** ein Korrekturwert für den Haltestrom in oder an der Kraftstoffzumesseinheit (10) gespeichert wird.

4. Verfahren nach einem der vorangehenden Ansprüche, **dadurch gekennzeichnet, dass** der Korrekturwert für den Haltestrom von einem Motorsteuergerät (14) einmalig eingelesen wird.

5. Verfahren nach einem der vorangehenden Ansprüche, **dadurch gekennzeichnet, dass** der Korrekturwert für den Haltestrom durch eine in dem Motorsteuergerät (14) vorgesehene Driftkompensation über die Lebensdauer der Pumpe-Düse-Einheit (10) anpassbar ist.

6. Verfahren nach einem der vorangehenden Ansprüche, **dadurch gekennzeichnet, dass** die Kraftstoffzumesseinheit (10) in Abhängigkeit des Korrekturwertes für den Haltestrom einer Klasse zugeordnet wird.

7. Verfahren nach einem der vorangehenden Ansprüche, **dadurch gekennzeichnet, dass** der korrigierte Haltestrom durch einmaliges Einstellen eines an der Pumpe-Düse-Einheit (10) angeordneten Potentiometers eingestellt wird.

8. Verfahren zum Beeinflussen der Einspritzmenge einer Pumpe-Düse-Einheit (10) mit den Schritten:
- Ermitteln der Einspritzmenge für wenigstens einen Prüfpunkt und
- Korrigieren der Einspritzmenge in Abhängigkeit der an dem wenigstens einen Prüfpunkt ermittelten Einspritzmenge
**dadurch gekennzeichnet,**
- **dass** die Einspritzmenge durch Korrigieren einer Haltekraft eines Magnetventils korrigiert wird,
- **dass** die korrigierte Haltekraft zur Korrektur der Einspritzmenge im gesamten Betriebsbereich der Pumpe-Düse-Einheit (10) verwendet wird und
- **dass** die Haltekraft durch Abgreifen einer bestimmten Windungszahl an der Magnetventilspule eingestellt wird.

9. System zum Beeinflussen der Einspritzmenge einer Pumpe-Düse-Einheit (10) mit
- Mitteln (12) zum Ermitteln der Einspritzmenge für wenigstens einen Prüfpunkt und
- Mitteln zum Korrigieren der Einspritzmenge in Abhängigkeit der an dem wenigstens einen Prüfpunkt ermittelten Einspritzmenge,
**dadurch gekennzeichnet,**
- **dass** die Mittel zum Korrigieren der Einspritzmenge einen Haltestrom eines Magnetventils korrigieren und
- **dass** der korrigierte Haltestrom zur Korrektur der Einspritzmenge im gesamten Betriebsbereich der Pumpe-Düse-Einheit (10) verwendbar ist.

10. System nach Anspruch 9, **dadurch gekennzeichnet, dass** durch die Mittel (12) zum Ermitteln der Einspritzmenge Werte an mehreren Prüfpunkten ermittelbar sind.

11. System nach Anspruch 9 oder 10, **dadurch gekennzeichnet, dass** Mittel zum Speichern eines Korrekturwertes für den Haltestrom in oder an der Kraftstoffzumesseinheit (10) vorgesehen sind.

12. System nach einem der Ansprüche 9 bis 11, **dadurch gekennzeichnet, dass** die Mittel zum Korrigieren der Einspritzmenge in einem Motorsteuergerät (14) integriert sind.

13. System nach einem der Ansprüche 9 bis 12, **dadurch gekennzeichnet, dass** in dem Motorsteuergerät (14) eine Driftkompensation vorgesehen ist.

14. System nach einem der Ansprüche 9 bis 13, **dadurch gekennzeichnet, dass** Mittel zum Klassifizieren der Pumpe-Düse-Einheit (10) in Abhängigkeit des Korrekturwertes für den Haltestrom vorgesehen sind.

15. System nach einem der Ansprüche 9 bis 14, **dadurch gekennzeichnet, dass** an der Pumpe-Düse-Einheit (10) ein Potentiometer zum Einstellen des Haltestroms vorgesehen ist.

16. System zum Beeinflussen der Einspritzmenge einer Pumpe-Düse-Einheit (10) mit
- Mitteln (12) zum Ermitteln der Einspritzmenge für wenigstens einen Prüfpunkt und
- Mitteln zum Korrigieren der Einspritzmenge in Abhängigkeit der an dem wenigstens einen Prüfpunkt ermittelten Einspritzmenge,
**dadurch gekennzeichnet,**
- **dass** die Mittel zum Korrigieren der Einspritzmenge eine Haltekraft eines Magnetventils korrigieren,
- **dass** die korrigierte Haltekraft zur Korrektur der Einspritzmenge im gesamten Betriebsbereich der Pumpe-Düse-Einheit (10) verwendbar ist und
- **dass** Mittel zum Abgreifen einer bestimmten Windungszahl an der Magnetventilspule und somit zum Korrigieren der Haltekraft vorgesehen sind.

## Claims

1. Method for influencing the injection quantity of a fuel metering unit in the form of a pump nozzle unit (10), having the steps:
- the injection quantity is determined for at least one checkpoint, and
- the injection quantity is corrected as a function of the injection quantity which is determined at the at least one checkpoint,
**characterized**
- **in that** the injection quantity is corrected by correcting a holding current of a solenoid valve, and
- **in that** the corrected holding current is used to correct the injection quantity in the entire operating range of the pump nozzle unit (10).

2. Method according to Claim 1, **characterized in that** the holding current is corrected on the basis of injection quantities which are determined at a plurality of checkpoints.

3. Method according to Claim 1 or 2, **characterized in that** a correction value for the holding current is stored in or at the fuel metering unit (10).

4. Method according to one of the preceding claims, **characterized in that** the correction value for the holding current is read in once from an engine control device (14).

5. Method according to one of the preceding claims, **characterized in that** the correction value for the holding current can be adapted over the service life of the pump nozzle unit (10) by means of drift compensation which is provided in the engine control device (14).

6. Method according to one of the preceding claims, **characterized in that** the fuel metering unit (10) is assigned to a class as a function of the correction value for the holding current.

7. Method according to one of the preceding claims, **characterized in that** the corrected holding current is set by a single adjustment of a potentiometer which is arranged at the pump nozzle unit (10).

8. Method for influencing the injection quantity of a pump nozzle unit (10), having the steps:
- the injection quantity is determined for at least one checkpoint, and
- the injection quantity is corrected as a function of the injection quantity which is determined at the at least one checkpoint,
**characterized**
- **in that** the injection quantity is corrected by correcting a holding force of a solenoid valve,
- **in that** the corrected holding force is used to correct the injection quantity in the entire operating range of the pump nozzle unit (10), and
- **in that** the holding force is set by tapping a certain number of turns on the solenoid valve coil.

9. System for influencing the injection quantity of a pump nozzle unit (10), having
- means (12) for determining the injection quantity for at least one checkpoint, and
- means for correcting the injection quantity as a function of the injection quantity which is determined at the at least one checkpoint,
**characterized**
- **in that** the means for correcting the injection quantity correct a holding current of a solenoid valve, and
- **in that** the corrected holding current can be used to correct the injection quantity in the entire operating range of the pump nozzle unit (10).

10. System according to Claim 9, **characterized in that** values can be determined at a plurality of checkpoints by the means (12) for determining the injection quantity.

11. System according to Claim 9 or 10, **characterized in that** means for storing a correction value for the holding current are provided in or at the fuel metering unit (10).

12. System according to one of Claims 9 to 11, **characterized in that** the means for correcting the injection quantity are integrated into an engine control device (14).

13. System according to one of Claims 9 to 12, **characterized in that** a drift compensation is provided in the engine control device (14).

14. System according to one of Claims 9 to 13, **characterized in that** means are provided for classifying the pump nozzle unit (10) as a function of the correction value for the holding current.

15. System according to one of Claims 9 to 14, **characterized in that** a potentiometer for adjusting the holding current is provided at the pump nozzle unit (10).

16. System for influencing the injection quantity of a pump nozzle unit (10), having
- means (12) for determining the injection quantity for at least one checkpoint, and
- means for correcting the injection quantity as a function of the injection quantity which is determined at the at least one checkpoint,
**characterized**
- **in that** the means for correcting the injection quantity correct a holding force of a solenoid valve,
- **in that** the corrected holding force can be used to correct the injection quantity in the entire operating range of the pump nozzle unit (10), and
- **in that** means are provided for tapping a certain number of turns on the solenoid valve coil and thus for correcting the holding force.

## Revendications

1. Procédé pour influencer la dose injectée par une unité de dosage de carburant sous la forme d'une unité pompe-buse (11) comprenant les étapes suivantes :
- détermination de la quantité injectée pour au moins un point de contrôle, et
- correction de la quantité injectée en fonction de la quantité injectée, déterminée à au moins un point de contrôle,
**caractérisé en ce qu'**
- on corrige la quantité injectée en corrigeant le courant de maintien d'une électrovanne, et
- on corrige le courant de maintien pour corriger la quantité injectée dans toute la plage de fonctionnement de l'ensemble pompe-buse (10).

2. Procédé selon la revendication 1,
**caractérisé en ce qu'**
on corrige le courant de maintien en fonction de doses injectées déterminées à plusieurs points de contrôle.

3. Procédé selon l'une quelconque des revendications 1 ou 2,
**caractérisé en ce qu'**
on mémorise une valeur de correction du courant de maintien dans ou au niveau de l'unité de dosage de carburant (10).

4. Procédé selon l'une quelconque des revendications précédentes,
**caractérisé en ce qu'**
on enregistre la valeur de correction du courant de maintien une seule fois à l'aide d'un appareil de commande de moteur (14).

5. Procédé selon l'une quelconque des revendications précédentes,
**caractérisé en ce que**
l'on adapte la valeur de correction du courant de maintien par une compensation de dérive prévue dans l'appareil de commande de moteur (14), l'adaptation se faisant selon la durée de vie de l'ensemble pompe-buse (10).

6. Procédé selon l'une quelconque des revendications précédentes,
**caractérisé en ce que**
l'unité de dosage de carburant (10) est associée à une classe en fonction de la valeur de correction du courant de maintien.

7. Procédé selon l'une quelconque des revendications précédentes,
**caractérisé en ce que**
l'on règle le courant de maintien corrigé par un unique réglage d'un potentiomètre équipant l'unité pompe-buse (10).

8. Procédé pour influencer la dose injectée par un ensemble pompe-buse (10) comprenant les étapes suivantes :
- on détermine la dose injectée à au moins un point de contrôle, et
- on corrige la dose injectée en fonction de la dose injectée déterminée à au moins un point de contrôle,
**caractérisé en ce qu'**
- on corrige la dose injectée en corrigeant la force de maintien d'une électrovanne,
- on utilise la force de maintien corrigée pour corriger la dose injectée dans toute la plage de fonctionnement de l'ensemble pompe-buse (10), et
- on règle la force de maintien en détectant un nombre de spires déterminé de la bobine de l'électrovanne.

9. Système pour influencer la dose injectée par un ensemble pompe-buse (10) comprenant :
- des moyens (12) pour déterminer la dose injectée à au moins un point de contrôle, et
- des moyens pour corriger la dose injectée en fonction d'une dose injectée déterminée à au moins un point de contrôle,
**caractérisé en ce que**
- les moyens de correction pour corriger la dose injectée corrigent le courant de maintient d'une électrovanne, et
- le courant de maintien corrigé est utilisé pour corriger la dose injectée dans toute la plage de fonctionnement de l'ensemble pompe-buse (10).

10. Système selon la revendication 9,
**caractérisé par**
des moyens (12) pour déterminer les valeurs de dose injectée en plusieurs points de contrôle.

11. Système selon l'une quelconque des revendications 9 ou 10,
**caractérisé par**
des moyens pour enregistrer une valeur de correction du courant de maintien dans ou au niveau de l'unité de dosage de carburant (10).

12. Système selon l'une quelconque des revendications 9 à 11,
**caractérisé en ce que**
les moyens de correction de la dose injectée sont intégrés dans un appareil de commande de moteur (14).

13. Système selon l'une quelconque des revendications 9 à 12,
**caractérisé par**
une compensation de dérive dans l'appareil de commande de moteur (14).

14. Système selon l'une quelconque des revendications 9 à 13,
**caractérisé par**
des moyens pour classer l'ensemble pompe-buse (10) en fonction des valeurs de correction du courant de maintien.

15. Système selon l'une quelconque des revendications 9 à 14,
**caractérisé par**
un potentiomètre équipant l'ensemble pompe-buse (10) pour régler le courant de maintien.

16. Système pour influencer la dose injectée par un ensemble pompe-buse (10) comprenant :
- des moyens (12) pour déterminer la dose injectée à au moins un point de contrôle, et
- des moyens pour corriger la dose injectée en fonction de la dose injectée déterminée à au moins un point de contrôle,
**caractérisé en ce que**
- les moyens de correction de la dose injectée corrigent la force de maintien d'une électrovanne,
- la force de maintien corrigée est utilisée pour corriger la dose injectée dans toute la plage de fonctionnement de l'ensemble pompe-buse (10), et
- des moyens sont prévus pour détecter un certain nombre de spires de la bobine de l'électrovanne et assurer ainsi une force de maintien corrigée.
